(19) Europäisches Patentamt
European Patent Office
Office européen des brevets

(11) **EP 4 614 348 A1**

(12) **EUROPEAN PATENT APPLICATION**
published in accordance with Art. 153(4) EPC

(43) Date of publication:
**10.09.2025 Bulletin 2025/37**

(51) International Patent Classification (IPC):
***G06F 16/332*** (2025.01)

(21) Application number: **23890217.5**

(52) Cooperative Patent Classification (CPC):
**G06F 16/33; G06F 16/332; G06F 16/35**

(22) Date of filing: **30.06.2023**

(86) International application number:
**PCT/CN2023/104438**

(87) International publication number:
**WO 2024/103775 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022 CN 202211448800**

(71) Applicant: **Huawei Technologies Co., Ltd.
Shenzhen, Guangdong 518129 (CN)**

(72) Inventors:
• **TONG, Xin**
  **Shenzhen, Guangdong 518129 (CN)**
• **ZHANG, Xinyu**
  **Shenzhen, Guangdong 518129 (CN)**
• **SHI, Ruifeng**
  **Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **ANSWER GENERATION METHOD AND APPARATUS, AND STORAGE MEDIUM**

(57)    This application relates to the field of artificial intelligence technologies, and in particular, to an answer generation method and apparatus, and a storage medium. The method includes: retrieving, based on an input target question, k support documents related to the target question, where k is a positive integer greater than 1; concatenating, for each of the k support documents, the target question and the support document, to obtain a combination pair; performing information aggregation on the k combination pairs, to obtain target aggregation information, where the information aggregation includes information encoding and exchanging; and generating, based on the target aggregation information, a target answer corresponding to the target question. In embodiments of this application, a generated target answer is obtained through integration from a plurality of support documents by using a multi-source information retrieval aggregation generation technology, and an answer generated by a device is controlled by using a fusion distribution technology. This resolves a problem that a generated answer is uncontrollable in a related technology, so that generated content is reliable and has strong logic.

Retrieve, based on an input target question, k support documents related to the target question, where k is a positive integer greater than 1 — 501

Concatenate, for each of the k support documents, the target question and the support document, to obtain a combination pair — 502

Perform information aggregation on k combination pairs, to obtain target aggregation information, where the information aggregation includes information encoding and exchanging — 503

Generate, based on the target aggregation information, a target answer corresponding to the target question — 504

FIG. 5

**Description**

This application claims priority to Chinese Patent Application No. 202211448800.0, filed with the China National Intellectual Property Administration on November 18, 2022 and entitled "ANSWER GENERATION METHOD AND APPARATUS, AND STORAGE MEDIUM", which is incorporated herein by reference in its entirety.

**TECHNICAL FIELD**

This application relates to the field of artificial intelligence technologies, and in particular, to an answer generation method and apparatus, and a storage medium.

**BACKGROUND**

An extractive question answering manner is used in most of current question answering systems, and a multi-source multi-answer scenario cannot be well processed. In addition, the extractive answer manner does not have a summarizing capability, and effect of generating an answer is poor. In the current question answering system, a zero-click search manner is widely used. A question answering system usually needs to include the following parts: an architecture constructed for multi-document information retrieval, aggregation, and generation, a controllable answer generation technology based on an encoding/decoding fusion distribution, and a user interface (User Interface, UI) for user-friendly multi-source answer generation, to improve an answering capability, an abstract summarizing capability, and accuracy of the question answering system, and implement a question answering generation capability in an open domain.

In a related technology, a question answering generation technology based on a pre-trained model includes: A model is pre-trained based on massive data; and after obtaining an input question, a computing device inputs the question to the pre-trained model, and outputs an obtained answer corresponding to the question.

However, in the foregoing method, knowledge is implicitly stored in a model parameter, and an amount of stored knowledge depends on a quantity of model parameters. Consequently, training of an ultra-large model consumes excessive time. In addition, when answering a characteristic question, the model may copy a common answer, to generate hallucinated content (English: hallucinated content). For example, an input question is "What does Helicobacter pylori negative mean", and an output answer that is generated by using the foregoing method is "A negative result of gastric Helicobacter pylori antibodies indicates that you don't have an infection with gastric Helicobacter pylori. This is a common disease. It is recommended that you seek medical treatment in time". It can be seen that the answer output by the model can come to a conclusion in which the negative result indicates that there is no infection. However, the wrong suggestion for seeking medical treatment in time is still provided. In addition, traceability of the foregoing method is poor, an answer is uncontrollable, and a risk is high when the method is used online.

In view of this, an answer generation method and apparatus, and a storage medium are provided. In embodiments of this application, an answer is obtained through integration based on a plurality of support documents. For each of the plurality of support documents, a target question and the support document are concatenated, to obtain a combination pair; information aggregation is performed on a plurality of combination pairs, to obtain target aggregation information; and a target answer corresponding to the target question is generated based on the target aggregation information. In other words, the answer generated by the device is controlled by using a fusion distribution technology. This resolves a problem that a generated answer is uncontrollable in a related technology, so that generated content is reliable and has strong logic.

According to a first aspect, an embodiment of this application provides an answer generation method. The method includes:

retrieving, based on an input target question, k support documents related to the target question, where k is a positive integer greater than 1;
concatenating, for each of the k support documents, the target question and the support document, to obtain a combination pair;
performing information aggregation on the k combination pairs, to obtain target aggregation information, where the information aggregation includes information encoding and exchanging; and
generating, based on the target aggregation information, a target answer corresponding to the target question.

In this implementation, the k support documents related to the target question are retrieved based on the input target question, where k is a positive integer greater than 1. For each of the k support documents, the target question and the support document are concatenated, to obtain the combination pair. Information aggregation is performed on the k combination pairs, to obtain the target aggregation information, where the information aggregation includes information encoding and exchanging. The target answer corresponding to the target question is generated based on the target aggregation information. In other words, the generated target answer is obtained through integration from the plurality of support documents by using a multi-source information retrieval aggregation generation technology, and an answer generated by a device is controlled by using a fusion distribution technology. This resolves a problem that a generated answer is uncontrollable in a related technology, so that generated content is reliable and has strong logic.

In a possible implementation, the performing information aggregation on the k combination pairs, to obtain target aggregation information includes:

> encoding the k combination pairs, to obtain first vectors respectively corresponding to the k combination pairs;
> concatenating the k first vectors, to obtain a second vector; and
> fusing information in the documents based on the second vector, to obtain a third vector, where the third vector indicates the target aggregation information.

In this implementation, the k combination pairs are encoded, to obtain the first vectors respectively corresponding to the k combination pairs. The k first vectors are concatenated, to obtain the second vector. The information in the documents is fused based on the second vector, to obtain the third vector, where the third vector indicates the target aggregation information. The answer generated by using an answer generation technology based on an encoding/decoding fusion distribution has comprehensive content and strong traceability.

In another possible implementation, the fusing information in the documents based on the second vector, to obtain a third vector includes:

performing attention calculation based on the second vector and retrieval scores respectively corresponding to the k support documents, to obtain the third vector, where the retrieval score indicates a correlation between the support document and the target question.

In this implementation, attention calculation is performed based on the second vector and the retrieval scores respectively corresponding to the k support documents, to obtain the third vector, where the retrieval score indicates the correlation between the support document and the target question. This ensures that the third vector indicating the target aggregation information is reasonable and valid.

In another possible implementation, the retrieval score of the support document is in a positive correlation with impact of the support document on the third vector.

In this implementation, the retrieval score of the support document is in a positive correlation with the impact of the support document on the third vector. For example, in an attention calculation process, larger weighting is given to an attention weight of a support document with a higher retrieval score, so that the support document has greater impact on a fused vector. The weighted attention calculation is repeatedly performed for one or more times, to ensure that the finally fused third vector can reflect importance information of different support documents.

In another possible implementation, the generating, based on the target aggregation information, a target answer corresponding to the target question includes:

> determining a first probability distribution and a second probability distribution based on the target aggregation information, where the first probability distribution indicates a probability that each word in a preset vocabulary is used as a currently output decoding word, and the second probability distribution indicates a probability that each word in the k support documents is used as a currently output decoding word,
> fusing the first probability distribution and the second probability distribution, to obtain a third probability distribution; and
> decoding the third probability distribution, to obtain the target answer corresponding to the target question.

In this implementation, the first probability distribution and the second probability distribution are determined based on the target aggregation information, where the first probability distribution indicates the probability that each word in the preset vocabulary is used as the currently output decoding word, and the second probability distribution indicates the probability that each word in the k support documents is used as the currently output decoding word. The first probability distribution and the second probability distribution are fused, to obtain the third probability distribution. The third probability distribution is decoded, to obtain the target answer corresponding to the target question. Therefore, in the answer generation method, both the generated vocabulary probability distribution (namely, the first probability distribution) and the extracted document probability distribution (namely, the second probability distribution) are considered, the two probability distributions are combined in an adaptive manner, and the current decoding word is determined based on the final probability distribution (namely, the third probability distribution) obtained through combination. This ensures accuracy of the generated target answer.

In another possible implementation, the method further includes:

presenting the target answer and answer source information in a target form, where the target form includes a question answering card or speech broadcast, and the answer source information includes source information of support documents respectively corresponding to a plurality of answer segments of the target answer.

In this implementation, the target answer and the answer source information are presented in the target form, where the target form includes the question answering card or the speech broadcast, and the answer source information includes the source information of the support documents respectively corresponding to the plurality of answer segments of the target answer. Therefore, the device can present both the target answer of the target question and the source information of the support documents respectively corresponding to the plurality of answer segments of the target answer. This avoids a case in which an answer of a question answering system in a related technology is equipped with only one landing web page. An interface that presents an answer generated based on a plurality of sources is designed, to present multi-source answer information, and ensure answer generation effect in a question answering scenario.

In another possible implementation, any two pieces of the answer source information have different colors and/or shapes.

In this implementation, any two pieces of the answer source information have different colors and/or shapes. Therefore, the device can not only present the source information of the support documents respectively corresponding to the plurality of answer segments of the target answer, but also use colors and/or shapes to distinguish answer segments of different sources. This further improves the answer generation effect in the question answering scenario.

In another possible implementation, the method further includes:
when receiving a first trigger signal corresponding to an answer segment of the target answer, displaying, on a current interface in a superimposed manner, description information corresponding to the answer segment.

In this implementation, when the first trigger signal corresponding to the answer segment of the target answer is received, the description information corresponding to the answer segment is displayed on the current interface in a superimposed manner. Therefore, the device can further present details of the answer based on the specified trigger signal. Further, content of the generated answer is more comprehensive and intelligent.

In another possible implementation, the method further includes:

when receiving a second trigger signal corresponding to an answer segment of the target answer, jumping to and displaying a source web page corresponding to the answer segment; or
when receiving a second trigger signal corresponding to an answer segment of the target answer, switching a display state of the answer segment from a first display state to a second display state, and jumping to and displaying a source web page corresponding to the answer segment, where the first display state is different from the second display state.

In this implementation, when the second trigger signal corresponding to the answer segment of the target answer is received, the source web page corresponding to the answer segment is jumped to and displayed. Alternatively, when the second trigger signal corresponding to the answer segment of the target answer is received, the display state of the answer segment is switched from the first display state to the second display state, and the source web page corresponding to the answer segment is jumped to and displayed, where the first display state is different from the second display state. For example, a user may tap answer segments of different sources, and after receiving a tap operation signal, the device may jump to the source web page from which the answer segment comes, to further provide details of the answer and support, and further improve answer generation effect.

According to a second aspect, an embodiment of this application provides an answer generation apparatus. The apparatus includes:

a retrieval unit, configured to retrieve, based on an input target question, k support documents related to the target question, where k is a positive integer greater than 1;
a concatenation unit, configured to concatenate, for each of the k support documents, the target question and the support document, to obtain a combination pair;
an aggregation unit, configured to perform information aggregation on the k combination pairs, to obtain target aggregation information, where the information aggregation includes information encoding and exchanging; and
a generation unit, configured to generate, based on the target aggregation information, a target answer corresponding to the target question.

In a possible implementation, the aggregation unit is further configured to:

encode the k combination pairs, to obtain first vectors respectively corresponding to the k combination pairs;
concatenate the k first vectors, to obtain a second vector; and
fuse information in the documents based on the second vector, to obtain a third vector, where the third vector indicates the target aggregation information.

In another possible implementation, the aggregation unit is further configured to:
perform attention calculation based on the second vector and retrieval scores respectively corresponding to the k support documents, to obtain the third vector, where the retrieval score indicates a correlation between the support document and the target question.

In another possible implementation, the retrieval score of the support document is in a positive correlation with impact of the support document on the third vector.

In another possible implementation, the generation unit is further configured to:

determine a first probability distribution and a second probability distribution based on the target aggregation information, where the first probability distribution indicates a probability that each word in a preset vocabulary is used as a currently output decoding word, and the second probability distribution indicates a probability that each word in the k support documents is used as a currently output decoding word;

fuse the first probability distribution and the second probability distribution, to obtain a third probability distribution; and

decode the third probability distribution, to obtain the target answer corresponding to the target question.

In another possible implementation, the apparatus further includes a present unit.

The present unit is configured to present the target answer and answer source information in a target form, where the target form includes a question answering card or speech broadcast, and the answer source information includes source information of support documents respectively corresponding to a plurality of answer segments of the target answer.

In another possible implementation, any two pieces of the answer source information have different colors and/or shapes.

In another possible implementation, the apparatus further includes a first display unit.

The first display unit is configured to: when receiving a first trigger signal corresponding to an answer segment of the target answer, display, on a current interface in a superimposed manner, description information corresponding to the answer segment.

In another possible implementation, the apparatus further includes a second display unit. The second display unit is configured to:

when receiving a second trigger signal corresponding to an answer segment of the target answer, jump to and display a source web page corresponding to the answer segment; or

when receiving a second trigger signal corresponding to an answer segment of the target answer, switch a display state of the answer segment from a first display state to a second display state, and jump to and display a source web page corresponding to the answer segment, where the first display state is different from the second display state.

According to a third aspect, an embodiment of this application provides an answer generation apparatus. The apparatus includes:

a processor; and

a storage, configured to store instructions executable by the processor, where

The processor is configured to implement the method provided in the first aspect or any one of the possible implementations of the first aspect when executing the instructions.

According to a fourth aspect, an embodiment of this application provides a non-volatile computer-readable storage medium. The non-volatile computer-readable storage medium stores computer program instructions. When the computer program instructions are executed by a processor, the method provided in the first aspect or any one of the possible implementations of the first aspect is implemented.

According to a fifth aspect, an embodiment of this application provides a computer program product. The computer program product includes computer-readable code or a non-volatile computer-readable storage medium carrying the computer-readable code. When the computer-readable code is run on a computing device, a processor of the computing device performs the method provided in the first aspect or any one of the possible implementations of the first aspect.

## BRIEF DESCRIPTION OF DRAWINGS

The accompanying drawings included in this specification and constituting a part of this specification and this specification jointly show example embodiments, features, and aspects of this application, and are intended to explain principles of this application.

FIG. 1 is a diagram of a structure of an answer generation system according to an example embodiment of this application;

FIG. 2 is a diagram of an implementation form of an embodiment of this application in a computing device;

FIG. 3 is a diagram of a structure of a terminal device according to an example embodiment of this application;

FIG. 4 is a block diagram of a software structure of a terminal device according to an example embodiment of this application;

FIG. 5 is a flowchart of an answer generation method according to an example embodiment of this application;

FIG. 6 is a diagram of a principle of an answer generation method according to an example embodiment of this application;

FIG. 7 is a flowchart of an answer generation method according to another example embodiment of this application;

FIG. 8 is a diagram of a component structure of an answer generation method according to another example embodiment of this application;

FIG. 9A and FIG. 9B are a diagram of a determining manner of a third probability distribution according to an example embodiment of this application;

FIG. 10 is a diagram of a question answering card interface according to an example embodiment of this application;

FIG. 11 is a diagram of a question answering card interface according to an example embodiment of this application;

FIG. 12 is a flowchart of an answer generation method according to another example embodiment of this application;

FIG. 13 is a diagram of a component structure of an answer generation method according to another example embodiment of this application; and

FIG. 14 shows an answer generation apparatus according to an example embodiment of this application.

## DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment, or illustration". Any embodiment described as "example" is not necessarily explained as being superior or better than other embodiments.

In addition, to better describe this application, numerous specific details are given in the following specific implementations. A person skilled in the art should understand that this application can also be implemented without some specific details. In some examples, methods, means, elements and circuits that are well-known to a person skilled in the art are not described in detail, so that the subject matter of this application is highlighted.

First, some terms used in embodiments of this application are described.

1. Zero-click search: After receiving an input question, a computing device can integrate knowledge in a web page via a search engine, and directly return an answer to the question instead of a source web page. In this way, a user can complete satisfactory search without a click operation.

2. Extractive question answering: The computing device extracts, as an answer to the question, one or more segments that are most related to a question from a source web page, and returns the answer to a client.

3. Generative question answering: The computing device generates an answer word by word by using a generator with reference to a question and source web page information, and returns the answer to a client. Different from the extractive question answering, the generative question answering may be used to generate any word in a vocabulary.

4. Encoder: The encoder vectorizes a text or an image into a vector in encoding space by using a neural network model, where the vector indicates the text or the image.

5. Decoder: The decoder converts a vector into a text or an image by using a neural network model, that is, converts, in a proper manner, information encoded in the vector into a form that can be received by a client, for example, the text or the image.

6. Beam search (English: beam search): The beam search is a heuristic search algorithm. A search tree is constructed through breadth-first search, and an optimal solution is approximately sought with a low memory requirement.

Currently, massive knowledge on the Internet needs to be summarized to answer a question. Mainstream search engines in the industry are mainly based on extraction, that is, extracting a related answer from a related web page. However, in this method, answers cannot be extracted from a plurality of web pages, and a complete, fluent, and high-quality answer cannot be integrated. In addition, a generation technology develops rapidly in academia. Currently, a large model can be used to generate a fluent answer that is obtained through summarization. However, this method faces a problem of hallucinated content, and a traceable and secure answer cannot be generated.

Therefore, embodiments of this application provide an answer generation method based on multi-source information retrieval and aggregation, to integrate answers by making full use of content of a plurality of web pages, and resolve, by using a fusion distribution-based generation technology, a problem that a generated answer is uncontrollable in the related technology. In addition, a complete set of system and a UI for presentation are also designed.

According to the answer generation method provided in embodiments of this application, an answer generation method based on multi-source information retrieval and aggregation is proposed for a search question answering scenario, to retrieve content of a web page on the Internet, and deeply analyze and integrate content of a plurality of web pages. This provides a solution for answering a complex question with a plurality of answers. In addition, an answer generated by a model is controlled by using encoding/decoding-based fusion distribution technology, so that generated content is reliable and has strong logic.

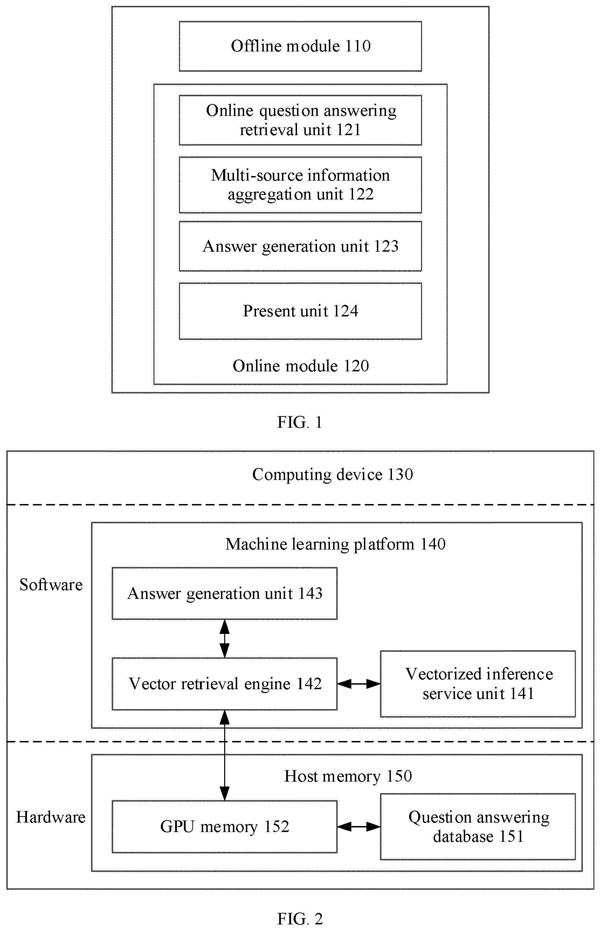

FIG. 1 is a diagram of a structure of an answer generation system according to an example embodiment of this application. The answer generation system includes an offline module 110 and an online module 120.

The offline module 110 is configured to construct a question answering database. The online module 120 includes an online question answering retrieval unit 121, a multi-source information aggregation unit 122, an answer generation unit 123, and a present unit 124, where the multi-source information aggregation unit 122, the answer generation unit 123, and the present unit 124 are newly added units.

The offline module 110 is further configured to collect data of the question answering database. A retrieval model is used to encode the data into a base library vector for storage, and create an index.

The online question answering retrieval unit 121 is configured to encode, into a question vector by using the retrieval model, a question input by a user, and retrieve, by using a vector retrieval engine, a plurality of support documents that are most related to the question.

The multi-source information aggregation unit 122 is configured to first perform information exchanging and encoding, by using an encoder, on the retrieved support documents, and then perform information exchanging and encoding between the plurality of documents, so that information in the support documents is fully aggregated.

The answer generation unit 123 is configured to generate, for aggregated target aggregation information, an answer to the question by using a decoder, and present, for each segment of the answer, information in a support document to which each segment refers.

The present unit 124 is configured to: for the generated answer, output the answer to the question in a form of a question answering card, speech broadcast, or the like, and output answer source information. The answer source information includes source information of support documents respectively corresponding to a plurality of answer segments of the answer.

A product implementation form in embodiments of this application is program code that is included in software on a machine learning or deep learning platform and that is deployed on hardware of a computing device. The application scenario shown in FIG. 1 is used as an example. The program code in embodiments of this application exists inside a vectorized inference service, the vector retrieval engine, and the answer generation module of the software on the platform, and outside an existing module. During running, the program code in embodiments of this application is run in a host memory and/or a graphics processing unit (Graphics Processing Unit, GPU) memory of the computing device. FIG. 2 is a diagram of an implementation form of an embodiment of this application in a computing device 130. A machine learning platform 140 of the computing device 130 includes a vectorized inference service unit 141, a vector retrieval engine 142, and an answer generation unit 143. A host memory 150 of the computing device 130 includes a question answering database 151 and a GPU memory 152. A part shown in a dashed box is units newly added based on the software on the current platform in embodiments of this application.

An embodiment of this application provides an answer generation method performed by a computing device. The computing device may be a terminal device and/or a server. The terminal device includes a mobile terminal device or a fixed terminal device. For example, the terminal device in this application may be a smartphone, a netbook, a tablet computer, a notebook computer, a wearable electronic device (for example, a smart band or a smartwatch), a TV, a virtual reality device, a stereo, an electronic ink, or the like. The server may be one server, a server cluster including several servers, or a cloud computing service center.

All of the answer generation method provided in embodiments of this application may be performed by the terminal device, or may be performed by the server; or some steps may be performed by the terminal device, and other steps may be performed by the server. For example, the terminal device obtains an input question, and sends the question to the server. The server performs online question answering retrieval, multi-source information aggregation, and answer generation, to generate an answer to the question and answer source information, and sends the answer and the answer source information to the terminal device. The terminal device presents the answer and the answer source information. The answer source information includes source information of support documents respectively corresponding to a plurality of answer segments of the answer. For ease of description, the following uses only an example in which all of the answer generation method is performed by a computing device for description.

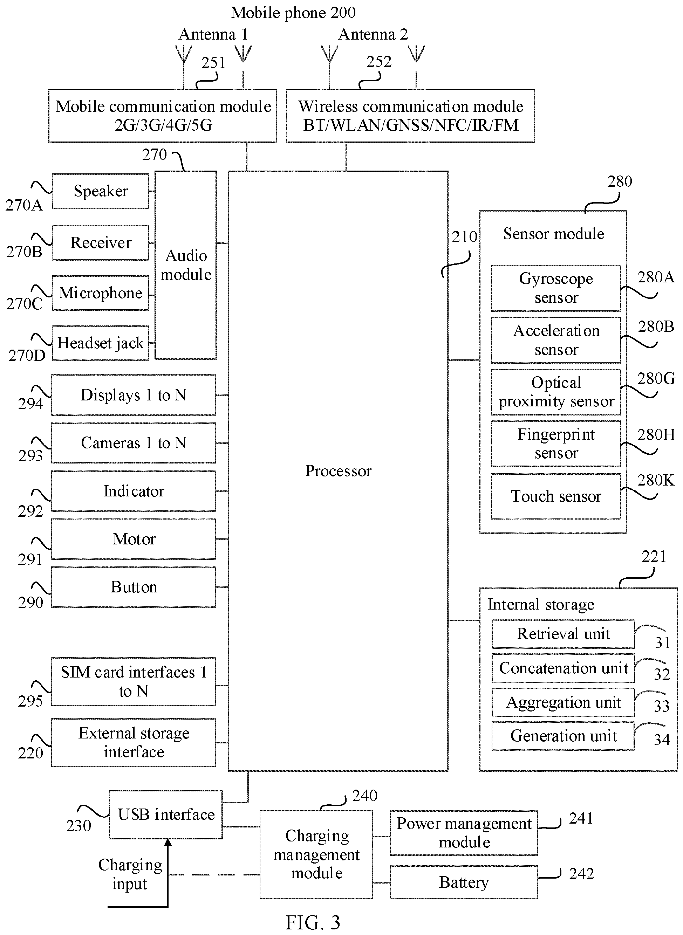

FIG. 3 is a diagram of a structure of a terminal device according to an example embodiment of this application. FIG. 3 is a diagram of a structure of a mobile phone 200 by using an example in which the terminal device is a mobile phone.

It may be understood that an example structure in embodiments of this application does not constitute a specific limitation on the mobile phone 200. In some other embodiments of this application, the mobile phone 200 may include more or fewer components than those shown in the figure, or some components may be combined, or some components may be split, or components are arranged in different manners. The components shown in the figure may be implemented by hardware, software, or a combination of software and hardware.

The processor 210 may include one or more processing units. For example, the processor 210 may include an application processor (application processor, AP), a modem processor, a GPU, an image signal processor (image signal processor, ISP), a controller, a storage, a video codec, a digital signal processor (digital signal processor, DSP), a baseband processor, and/or a neural network processing unit (Neural network Processing Unit, NPU).

The mobile phone 200 may include the processor 210, an external storage interface 220, an internal storage 221, a USB interface 230, a charging management module 240, a power management module 241, a battery 242, an antenna 1, an antenna 2, a mobile communication module 251, a wireless communication module 252, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like. The sensor module 280 may include a gyroscope sensor 280A, an acceleration sensor 280B, an optical proximity sensor 280G, a fingerprint sensor 280H, and a touch sensor 280K (certainly, the mobile phone 200 may further include other sensors such as a temperature sensor, a pressure sensor, a distance sensor, a magnetic sensor, an ambient light sensor, a barometric pressure sensor, and a bone conduction sensor, which are not shown in the figure).

Different processing units may be independent components, or may be integrated into one or more processors. The controller may be a nerve center and a command center of the mobile phone 200. The controller may generate an operation control signal based on instruction operation code and a time sequence signal, to complete control of instruction fetching and instruction execution.

The storage may be further disposed in the processor 210, and is configured to store instructions and data. In some embodiments, the storage in the processor 210 is a cache. The storage may store instructions or data just used or cyclically used by the processor 210. If the processor 210 needs to use the instructions or the data again, the processor 210 may directly invoke the instructions or the data from the storage. This avoids repeated access and reduces waiting time of the processor 210, thereby improving system efficiency.

The processor 210 may run an answer generation method provided in embodiment of this application. The processor 210 may include different components. For example, when a CPU and a GPU are integrated, the CPU and the GPU may cooperate to perform the answer generation method provided in embodiments of this application. For example, in the answer generation method, some algorithms are executed by the CPU, and other algorithms are executed by the GPU, to achieve fast processing efficiency.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 200 may include one or N displays 294, where N is a positive integer greater than 1. The display 294 may be configured to display information input by a user or information provided for a user, and various graphical user interfaces (graphical user interface, GUI). For example, the display 294 may display a photo, a video, a web page, a file, or the like. For another example, the display 294 may display a graphical user interface. The graphical user interface includes a status bar, a navigation bar that can be hidden, a time and weather widget (widget), and an application icon, for example, a browser icon. The status bar includes a carrier name (for example, China Mobile), a mobile network (for example, 4G), time, and a remaining battery level. The navigation bar includes a back (back) button icon, a home (home) button icon, and a forward button icon. In addition, it may be understood that, in some embodiments, the status bar may further include a Bluetooth icon, a Wi-Fi icon, an external device icon, and the like. It may be further understood that, in some other embodiments, the graphical user interface may further include a Dock bar, and the Dock bar may include a common application icon or the like. After the processor 210 detects a touch event of the user on an application icon by using a finger (a stylus or the like), in response to the touch event, the processor 210 starts a user interface of an application corresponding to the application icon, and displays the user interface of the application on the display 294.

In this embodiment of this application, the display 294 may be one integrated flexible display, or may be a spliced display including two rigid screens and one flexible screen located between the two rigid screens.

When the processor 210 runs the answer generation method provided in embodiments of this application, the terminal device may establish a connection to the server, exchange data according to the answer generation method provided in embodiments of this application, and control the display 294 to display a corresponding graphical user interface.

The camera 293 (which may be a front-facing camera, a rear-facing camera, or a camera that may serve as both a front-facing camera and a rear-facing camera) is configured to collect a static image or a video. Usually, the camera 293 may include a photosensitive element like a lens group and an image sensor. The lens group includes a plurality of lenses (convex lenses or concave lenses), and is configured to collect an optical signal reflected by a to-be-photographed object, and transfer the collected optical signal to the image sensor. The image sensor generates an original image of the to-be-shot object based on the optical signal.

The internal storage 221 may be configured to store computer-executable program code, and the executable program code includes instructions. The processor 210 runs the instructions stored in the internal storage 221, to implement various function applications and data processing of the mobile phone 200. The internal storage 221 may include a program storage area and a data storage area. The program storage area may store an operating system, code of an application program (for example, a camera application or a WeChat application), and the like. The data storage area may store data (for example, an image or a video collected by the camera application) and the like that are created during use of the mobile phone 200.

The internal storage 221 may further store one or more computer programs corresponding to the answer generation method provided in embodiments of this application. The one or more computer programs are stored in the storage 221 and are configured to be executed by the one or more processors 210. The one or more computer programs include instructions, and the instructions may be used to perform steps in the following embodiments. The computer programs may include a retrieval unit 31, a concatenation unit 32, an aggregation unit 33, and a generation unit 34. The retrieval unit 31 is configured to retrieve, based on an input target question, k support documents related to the target question, where k is a positive integer greater than 1. The concatenation unit 32 is configured to concatenate, for each of the k support documents, the target question and the support document, to obtain a combination pair. The aggregation unit 33 is configured to perform information aggregation on the k combination pairs, to obtain target aggregation information, where the information aggregation includes information encoding and exchanging. The generation unit 34 is configured to generate, based on the target aggregation information, a target answer corresponding to the target question.

In addition, the internal storage 221 may include a high-speed random access memory, or may include a non-volatile memory, for example, at least one magnetic disk storage device, a flash memory, or a universal flash storage (universal flash storage, UFS).

Certainly, the code of the answer generation method provided in embodiments of this application may be further stored in an external storage. In this case, the processor 210 may run, through the external storage interface 220, the code of the answer generation method stored in the external storage.

The following describes functions of the sensor module 280.

The gyroscope sensor 280A may be configured to determine a motion posture of the mobile phone 200. In some embodiments, angular velocities of the mobile phone 200 around three axes (namely, axes x, y, and z) may be determined by using the gyroscope sensor 280A. In other words, the gyroscope sensor 280A may be configured to detect a current motion status of the mobile phone 200, for example, a shaking state or a static state.

When the display in this embodiment of this application is a foldable screen, the gyroscope sensor 280A may be configured to detect a folding or unfolding operation performed on the display 294. The gyroscope sensor 280A may report the detected folding or unfolding operation as an event to the processor 210, to determine whether the display 294 is in a folded state or an unfolded state.

The acceleration sensor 280B may detect magnitudes of accelerations in various directions (usually on three axes) of the mobile phone 200. In other words, the gyroscope sensor 280A may be configured to detect a current motion status of the mobile phone 200, for example, a shaking state or a static state. When the display in this embodiment of this application is a foldable screen, the acceleration sensor 280B may be configured to detect a folding or unfolding operation performed on the display 294. The acceleration sensor 280B may report the detected folding or unfolding operation as an event to the processor 210, to determine whether the display 294 is in a folded state or an unfolded state.

The optical proximity sensor 280G may include, for example, a light-emitting diode (LED) and a photodetector, for example, a photodiode. The light-emitting diode may be an infrared light-emitting diode. The mobile phone emits infrared light by using the light-emitting diode. The mobile phone detects infrared reflected light from a nearby object by using the photodiode. When sufficient reflected light is detected, it may be determined that there is an object near the mobile phone. When insufficient reflected light is detected, the mobile phone may determine that there is no object near the mobile phone. When the display in this embodiment of this application is a foldable screen, the optical proximity sensor 280G may be disposed on a first screen of the foldable display 294, and the optical proximity sensor 280G may detect a magnitude of an angle between the first screen and a second screen in a folded or unfolded state based on an optical path difference between infrared signals.

The gyroscope sensor 280A (or the acceleration sensor 280B) may send detected motion status information (for example, the angular velocity) to the processor 210. The processor 210 determines, based on the motion status information, whether the mobile phone is currently in a handheld state or a tripod state (for example, when the angular velocity is not 0, it indicates that the mobile phone 200 is in the handheld state).

The fingerprint sensor 280H is configured to collect a fingerprint. The mobile phone 200 may use a feature of the collected fingerprint to implement fingerprint-based unlocking, application lock access, fingerprint-based photographing, fingerprint-based call answering, and the like.

The touch sensor 280K is also referred to as a "touch panel". The touch sensor 280K may be disposed on the display 294. The touch sensor 280K and the display 294 form a touchscreen, which is also referred to as a "touchscreen". The touch sensor 280K is configured to detect a touch operation performed on or near the touch sensor. The touch sensor may transfer the detected touch operation to the application processor to determine a type of the touch event. The display 294 may provide a visual output related to the touch operation. In some other embodiments, the touch sensor 280K may alternatively be disposed on a surface of the mobile phone 200 at a location different from that of the display 294.

For example, the display 294 of the mobile phone 200 displays a home screen, and the home screen includes icons of a plurality of applications (for example, a camera application and a WeChat application). The user taps an icon of the camera application on the home screen via the touch sensor 280K, to trigger the processor 210 to start the camera application and start up the camera 293. The display 294 displays an interface of the camera application, for example, a viewfinder interface.

A wireless communication function of the mobile phone 200 may be implemented by using the antenna 1, the antenna 2, the mobile communication module 251, the wireless communication module 252, the modem processor, the baseband processor, and the like.

The antenna 1 and the antenna 2 are configured to transmit and receive an electromagnetic wave signal. Each antenna in the mobile phone 200 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 251 may provide a wireless communication solution that includes 2G/3G/4G/5G or the like and that is applied to the mobile phone 200. The mobile communication module 251 may include at least one filter, a switch, a power amplifier, a low noise amplifier (low noise amplifier, LNA), and the like. The mobile communication module 251 may receive an electromagnetic wave by using the antenna 1, perform processing such as filtering and amplification on the received electromagnetic wave, and transmit a processed electromagnetic wave to the modem processor for demodulation. The mobile communication module 251 may further amplify a signal modulated by the modem processor, and convert the signal into an electromagnetic wave for radiation by using the antenna 1. In some embodiments, at least some functional modules in the mobile communication module 251 may be disposed in the processor 210. In some embodiments, at least some functional modules of the mobile communication module 251 and at least some modules of the processor 210 may be disposed in a same device. In this embodiment of this application, the mobile communication module 251 may be further configured to exchange information with the server.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 270A, the receiver 270B, and the like), or displays an image or a video through the display 294. In some embodiments, the modem processor may be an independent component. In some other embodiments, the modem processor may be independent of the processor 210, and is disposed in the same device with the mobile communication module 251 or another functional module.

The wireless communication module 252 may provide a wireless communication solution that is applied to the mobile phone 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 252 may be one or more devices integrating at least one communication processing module. The wireless communication module 252 receives an electromagnetic wave by using the antenna 2, performs frequency modulation and filtering processing on an electromagnetic wave signal, and sends a processed signal to the processor 210. The wireless communication module 252 may further receive a to-be-sent signal from the processor 210, perform frequency modulation and amplification on the to-be-sent signal, and convert the signal into an electromagnetic wave for radiation by using the antenna 2. In this embodiment of this application, the wireless communication module 252 is configured to transmit data with another terminal device under control of the processor 210.

The mobile phone 200 may implement an audio function like music playing or recording by using the audio module 270, the speaker 270A, the receiver 270B, the microphone 270C, the headset jack 270D, the application processor, and the like. The mobile phone 200 may receive an input from the button 290, and generate a button signal input related to user setting and function control of the mobile phone 200. The mobile phone 200 may generate a vibration prompt (for example, an incoming call vibration prompt) by using the motor 291. The indicator 292 in the mobile phone 200 may be indicator light, and may be configured to indicate a charging status and a power change, or may be configured to indicate a message, a missed call, a notification, and the like. The SIM card interface 295 in the mobile phone 200 is configured to connect to a SIM card. The SIM card may be inserted into the SIM card interface 295 or removed from the SIM card interface 295, to implement contact with or be separation from the mobile phone 200.

It should be understood that, during actual application, the mobile phone 200 may include more or fewer components than components shown in FIG. 3. This is not limited in this embodiment of this application. The mobile phone 200 shown in the figure is merely an example, and the mobile phone 200 may have more or fewer components than those shown in the figure, two or more components may be combined, or different component configurations may be used. Various components shown in the figure may be implemented in hardware, software, or a combination of hardware and software. The hardware, the software, or the combination of hardware and software includes one or more signal processing and/or application-specific integrated circuits.

A software system of the terminal device may use a layered architecture, an event-driven architecture, a microkernel architecture, a microservice architecture, or a cloud architecture. In this embodiment of this application, an Android system with a layered architecture is used as an example to describe a software structure of the terminal device.

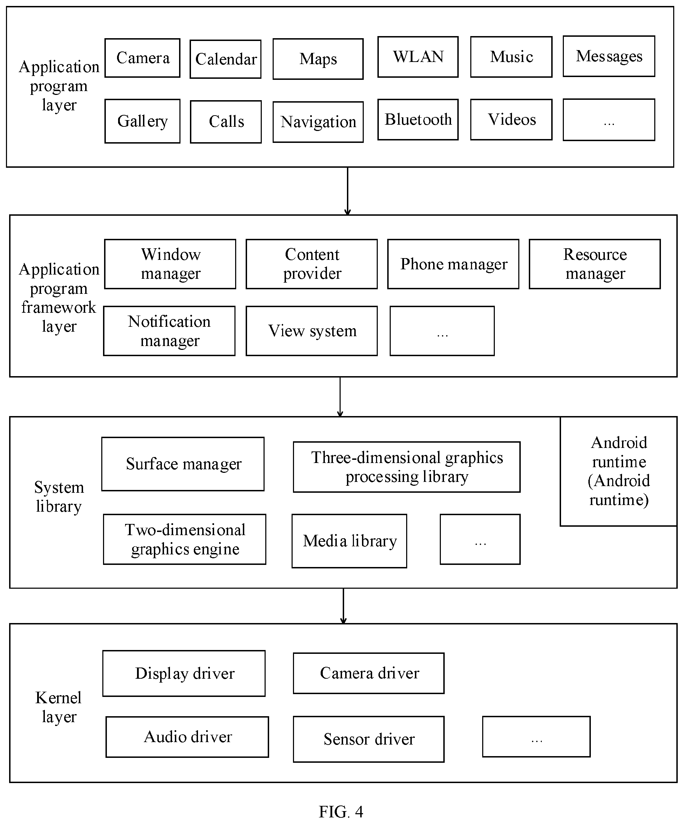

FIG. 4 is a block diagram of a software structure of a terminal device according to an example embodiment of this application.

In a layered architecture, software is divided into several layers, and each layer has a clear role and task. The layers communicate with each other through a software interface. In some embodiments, the Android system is divided into four layers: an application program layer, an application program framework layer, an Android runtime (Android runtime) and a system library, and a kernel layer from top to bottom.

The application program layer may include a series of application program packages.

As shown in FIG. 4, the application program packages may include application programs such as Phone, Camera, Gallery, Calendar, Calls, Maps, Navigation, WLAN, Bluetooth, Music, Videos, and Messages.

The application program framework layer provides an application programming interface (application programming interface, API) and a programming framework for an application program at the application program layer. The application program framework layer includes some predefined functions.

As shown in FIG. 4, the application program framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The window manager may further be configured to detect whether there is a trigger operation in this embodiment of this application, for example, a hover operation or a tap operation.

The content provider is configured to store and obtain data, and enable the data to be accessed by an application program. The data may include a video, an image, an audio, calls that are made and answered, a browsing history and bookmarks, an address book, and the like.

The view system includes visual controls such as a control for displaying text and a control for displaying an image. The view system may be configured to construct an application program. A display interface may include one or more views. For example, a display interface including a short message notification icon may include a text display view and an image display view.

The phone manager is configured to provide a communication function of the terminal device, for example, management of a call status (including answering, declining, or the like).

The resource manager provides various resources such as a localized character string, an icon, an image, a layout file, and a video file for an application program.

The notification manager enables an application program to display notification information in a status bar, and may be configured to convey a notification type message. The notification information may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application program that is run on a background, or may be a notification that appears on the screen in a form of a dialog window. For example, text information is displayed in the status bar, alert sound is given, the terminal device vibrates, or an indicator light blinks.

The Android runtime includes a kernel library and a virtual machine. The Android runtime is responsible for scheduling and management of the Android system.

The kernel library includes two parts: a function that needs to be called in the Java language and a kernel library of Android.

The application program layer and the application program framework layer run on the virtual machine. The virtual machine executes Java files of the application layer and the application program framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of application programs.

The media library supports playback and recording in a plurality of commonly used audio and video formats, and static image files. The media library may support a plurality of audio and video encoding formats such as MPEG-4, H.264, MP3, AAC, AMR, JPG, PNG, and the like.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes, by using several example embodiments, the answer generation method provided in embodiments of this application.

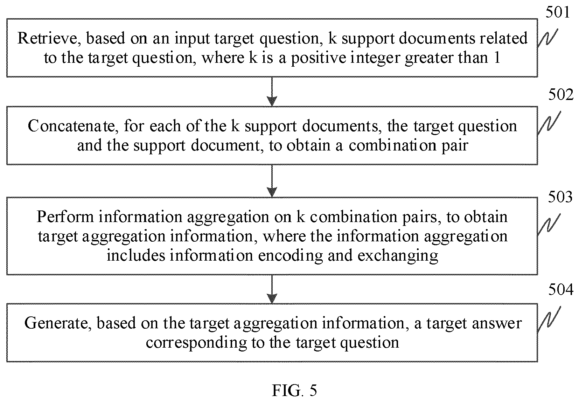

FIG. 5 is a flowchart of an answer generation method according to an example embodiment of this application. In this embodiment, an example in which the method is applied to the foregoing computing device is used for description. The method includes the following several steps:

Step 501: Retrieve, based on an input target question, k support documents related to the target question, where k is a positive integer greater than 1.

A computing device obtains the input target question, and retrieves the k support documents related to the target question, where k is a positive integer greater than 1. Optionally, the computing device performs vectorization encoding on the input target question, to obtain a question vector; retrieves, from a question answering database by using a vector retrieval engine, the k support documents related to the question vector; and records a retrieval score corresponding to each of the k support documents, where the retrieval score indicates a correlation between the support document and the target question.

Optionally, the target question is of a text type or a speech type. This is not limited in embodiments of this application.

For example, the computing device retrieves, from the question answering database, a plurality of candidate support documents related to the question vector, and determines the k support documents from the plurality of candidate support documents in descending order of correlations between the candidate support documents and the target question.

The retrieval score indicates the correlation between the support document and the target question. Optionally, the retrieval score is in a positive correlation with the correlation, that is, a higher retrieval score of the support document indicates a higher correlation between the support document and the target question.

Step 502: Concatenate, for each of the k support documents, the target question and the support document, to obtain a combination pair.

The computing device concatenates, for each of the k support documents, the target question and the support document, to obtain the combination pair. Each combination pair includes the target question and one support document. Finally, combination pairs respectively corresponding to the k support documents are obtained.

Step 503: Perform information aggregation on the k combination pairs, to obtain target aggregation information, where the information aggregation includes information encoding and exchanging.

The computing device performs information aggregation on the k combination pairs, to obtain the target aggregation information, where the information aggregation includes information encoding and exchanging. Optionally, the computing device encodes the k combination pairs, to obtain first vectors respectively corresponding to the k combination pairs; concatenates the k first vectors, to obtain a second vector; and fuses information in the documents based on the second vector, to obtain a third vector, where the third vector indicates the target aggregation information.

Optionally, the target aggregation information is information obtained by performing information aggregation on the k combination pairs, and the target aggregation information includes information of the target question, information in the k support documents, information of the target question and the k support documents, and information according to the k support documents.

For example, the information of the target question and the k support documents includes information of the target question and each support document and information of the target question and at least two support documents. For example, the information in the k support documents includes information in at least two of the k support documents. This is not limited in embodiments of this application.

Optionally, that the computing device encodes the k combination pairs, to obtain first vectors respectively corresponding to the k combination pairs includes: inputting, in a parallel manner, the k combination pairs into encoders with a same parameter, to obtain vectorization encoding representations of the k support documents.

Optionally, that the computing device fuses information in the documents based on the second vector, to obtain a third vector includes: performing attention calculation based on the second vector and retrieval scores respectively corresponding to the k support documents, to obtain the third vector, where the retrieval score indicates the correlation between the support document and the target question.

Optionally, the retrieval score of the support document is in a positive correlation with impact of the support document on the third vector. Optionally, in a vector fusion process, larger weighting is given to a document with a higher retrieval score, to finally obtain a fused vector, namely, the third vector, in which the information in the plurality of support documents is aggregated.

For example, the computing device concatenates the first vectors corresponding to the k combination pairs (the target question + the support documents), and then performs attention calculation, by using a transformer, on the second vector obtained through concatenation. In a calculation process, larger weighting is given to an attention weight of a support document with a higher retrieval score, so that the support document has greater impact on a fused vector. Finally, such weighted attention calculation is repeated for 1 to n times, to finally obtain the fused vector, namely, the third vector, where the third vector indicates the target aggregation information.

Step 504: Generate, based on the target aggregation information, a target answer corresponding to the target question.

The computing device generates, based on the target aggregation information, the target answer corresponding to the target question. Optionally, the computing device determines a first probability distribution and a second probability distribution based on the target aggregation information, where the first probability distribution indicates a probability that each word in a preset vocabulary is used as a currently output decoding word, and the second probability distribution indicates a probability that each word in the k support documents is used as a currently output decoding word; fuses the first probability distribution and the second probability distribution, to obtain a third probability distribution; and decodes the third probability distribution, to obtain the target answer corresponding to the target question.

Optionally, the computing device transfers, to a decoder, the third vector obtained through information aggregation, and the decoder may generate a high-quality and reliable answer whose source can be traceable by referring to the aggregated target aggregation information encoded in the vector. If the retrieved support documents cannot answer the question of a user or key entity information in the generated answer cannot be supported, the finally generated answer may be "null".

For example, the decoder generates the first probability distribution by using a vocabulary classifier; calculates attention of a current vector in the decoder and a hidden vector of each token (English: token) in the encoder, to obtain the second probability distribution; and performs weighted fusion on the first probability distribution and the second probability distribution, to obtain a fused probability distribution, namely, the third probability distribution. Finally, the decoder performs token-by-token decoding on the fused distribution in a beam search manner, to obtain the target answer to the target question. For the target answer obtained through decoding, the computing device performs character matching between the target answer and the support document, finds source information of each answer segment of the target answer, and verifies whether the key entity information such as a number can be supported in the support document.

Optionally, the computing device presents the target answer and answer source information in a target form, where the target form includes a question answering card or speech broadcast, and the answer source information includes source information of support documents respectively corresponding to a plurality of answer segments of the target answer.

For example, when the target answer includes the plurality of answer segments, source information corresponding to at least two of the plurality of answer segments is different, or source information corresponding to any two of the plurality of answer segments is different.

Optionally, any two pieces of the answer source information have different colors and/or shapes. It should be noted that colors and/or shapes may be used to distinguish between different source information. This is not limited in embodiments of this application.

Optionally, when receiving a first trigger signal corresponding to an answer segment of the target answer, description information corresponding to the answer segment is displayed on a current interface in a superimposed manner.

Optionally, the first trigger signal is a user operation signal acting on the answer segment, and the first trigger signal is used to trigger display of the description information corresponding to the answer segment on the current interface in the superimposed manner. For example, the first trigger signal is a hovering signal acting on the answer segment. This is not limited in embodiments of this application.

Optionally, when receiving a second trigger signal corresponding to an answer segment of the target answer, the computing device jumps to and displays a source web page corresponding to the answer segment; or when receiving a second trigger signal corresponding to an answer segment of the target answer, the computing device switches a display state of the answer segment from a first display state to a second display state, and jumps to and displays a source web page corresponding to the answer segment, where the first display state is different from the second display state.

Optionally, the second trigger signal is a user operation signal acting on the answer segment, and the second trigger signal is used to trigger jumping to and display of the source web page corresponding to the answer segment. For example, the second trigger signal is a tapping signal acting on the answer segment. This is not limited in embodiments of this application.

Optionally, the display state of the answer segment includes at least one of a text size, text thickness, a text color, or a text grayscale. For example, text thickness in the first display state is greater than text thickness in the second display state. For example, the first display state is a bold text display state, and the second display state is a normal text display state.

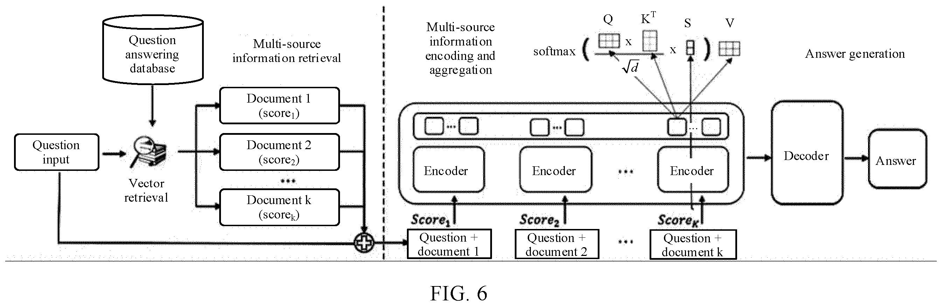

For example, as shown in FIG. 6, the computing device performs vector retrieval from the question answering database based on the input question, to obtain the k documents that are most related to the question; separately concatenates the target question with the k support documents, to obtain the combination pairs, that is, each combination pair includes the question and the document; performs independent and parallel encoding on data of the k combination pairs (question + documents) by using the encoder, to obtain independent encoding of the combination pairs (question + documents); concatenates the independent encoding, to obtain a second vector X; and fuses encoding information in the documents, to finally obtain a fused third vector Z. The third vector Z obtained through information aggregation is input into the decoder, and the decoder outputs the answer by referring to the aggregated target aggregation information encoded in the vector.

In conclusion, in embodiments of this application, the answer is obtained through integration based on the plurality of support documents. For each of the plurality of support documents, the target question and the support document are concatenated, to obtain the combination pair; information aggregation is performed on the plurality of combination pairs, to obtain the target aggregation information; and the target answer corresponding to the target question is generated based on the target aggregation information. In other words, the answer generated by the device is controlled by using a fusion distribution technology. This resolves a problem that a generated answer is uncontrollable in a related technology, so that generated content is reliable and has strong logic.

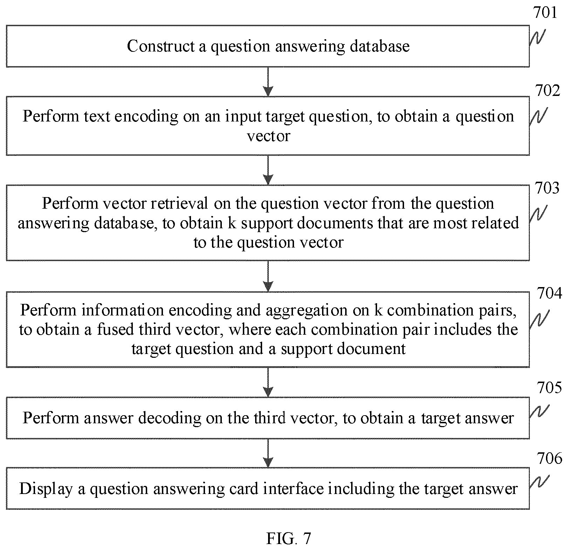

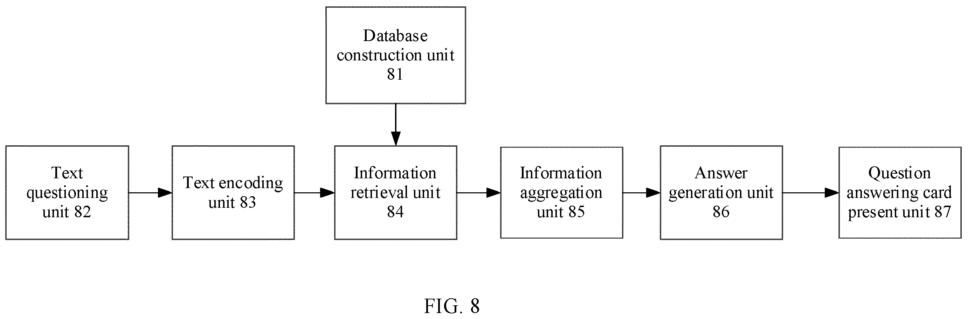

FIG. 7 is a flowchart of an answer generation method according to another example embodiment of this application. In this embodiment, an example in which the method is applied to the foregoing computing device is used for description. During search by a search engine, in the answer generation method provided in embodiments of this application, a question answering card is generated for a question of a text type of a user, to present a comprehensive and reliable answer, and provide a source of each answer segment of the answer. This improves zero-click search effect. As shown in FIG. 8, units related to this embodiment include a database construction unit 81, a text questioning unit 82, a text encoding unit 83, an information retrieval unit 84, an information aggregation unit 85, an answer generation unit 86, and a question answering card display unit 87. The method includes the following several steps:

Step 701: Construct a question answering database.

Optionally, a computing device vectorizes an answer in the question answering database by using a trained model, and constructs an index for an obtained vector by using a method like clustering. For example, the trained model is a BERT model.

Step 702: Perform text encoding on an input target question, to obtain a question vector.

Optionally, the computing device performs fine tuning by using a pre-trained model. During training, a training sample pair is input into the model, and the training sample pair includes a sample question and a corresponding sample answer. Technologies such as contrastive learning are used to align the question vector and an answer vector in encoding space. The target question is input during use, to obtain vectorized encoding of the target question, namely, the question vector.

Step 703: Perform vector retrieval on the question vector from the question answering database, to obtain k support documents that are most related to the question vector.

Optionally, the computing device performs vector retrieval on the question vector by using a vector retrieval engine, searches the question answering database for a latest answer vector, returns, as a recall result, the corresponding support documents corresponding to most related k answer vectors, and returns respective retrieval scores of the k support documents. For example, the retrieval score of the support document is a cosine similarity between the question vector and the answer vector. This is not limited in this application.

Step 704: Perform information encoding and aggregation on k combination pairs, to obtain a fused third vector, where each combination pair includes the target question and a support document.

Optionally, the computing device performs independent and parallel encoding on data of the k combination pairs by using an encoder, to efficiently complete information exchange in the documents, where an encoding speed linearly increases with a quantity of documents. After independent encoding of the combination pairs is obtained, the independent encoding of the combination pairs is concatenated, to obtain a second vector. Then, encoding information in the documents is fused according to a fusion retrieval score formula, to finally obtain the fused third vector.

The fusion retrieval score formula indicates that a support document with a larger retrieval score has greater impact. For example, the fusion retrieval score formula is as follows:

$$Z = \text{softmax}(\frac{QK^T}{\sqrt{d}} \times S)V; \text{ or } Z = \text{softmax}(\frac{QK^T}{\sqrt{d}} + \beta \cdot S)V$$

S is a vector of a retrieval score, $\beta$ is a learnable scalar hyperparameter, and Q, K, and V are d-dimensional feature vectors obtained based on the second vector X by using transformation matrices W1, W2, and W3, and respectively indicate a query feature, a key feature, and a value feature. According to the formula, a document with a larger retrieval score has greater impact on the finally fused third vector Z.

Step 705: Perform answer decoding on the third vector, to obtain a target answer.

Optionally, the computing device performs answer decoding on the third vector by using a decoder, to obtain the target answer.

Optionally, the computing device obtains a first probability distribution in a manner as follows: Fused hidden vectors at a last layer of the encoder are input into the decoder, and the decoder generates the first probability distribution by using a vocabulary classifier, where the first probability distribution indicates a probability that each word in a vocabulary is used as a currently output decoding word. The computing device obtains a second probability distribution in a manner as follows: The fused hidden vectors at the last layer of the encoder are input into the decoder, and the decoder calculates attention of a current vector in the decoder and a hidden vector of each token in the encoder, to obtain the second probability distribution, where the second probability distribution indicates a probability that each word in the documents is used as a currently output decoding word. The computing device obtains a fused third probability distribution in a manner as follows: Attention calculation is performed on a current vector in the decoder and a classification token (English: CLS token) of aggregated sentence-level semantics of each document, to obtain a weight p, where the third probability distribution is a weighted sum of the document probability distribution and the vocabulary probability distribution.

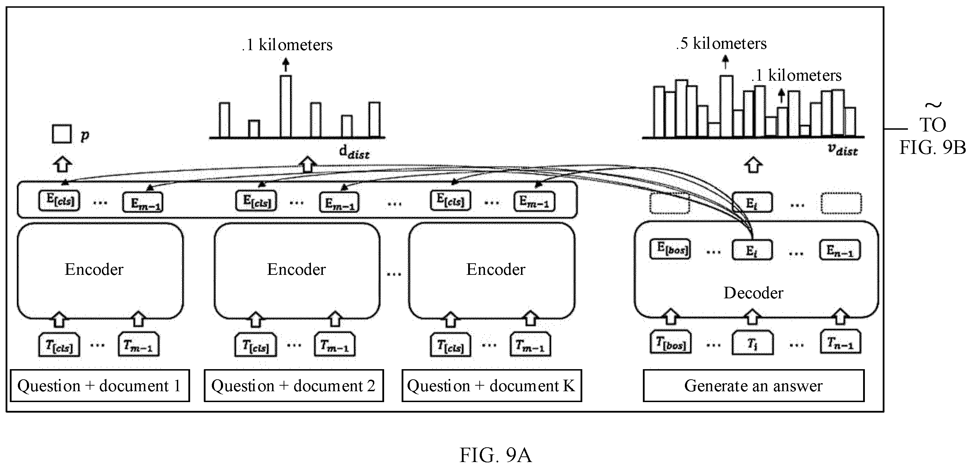

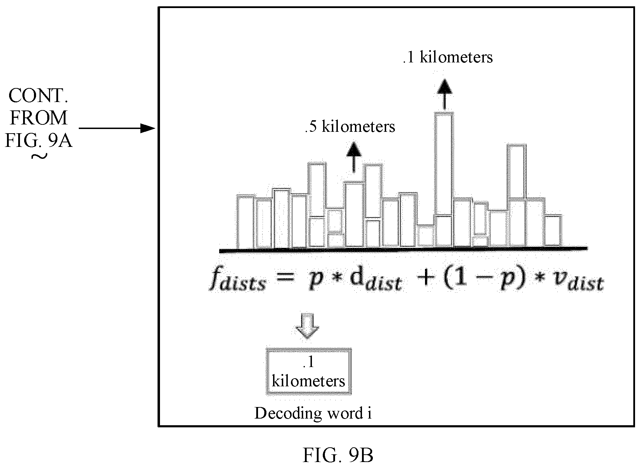

For example, as shown in FIG. 9A and FIG. 9B, the computing device inputs the fused hidden vectors at the last layer of the encoder into the decoder, and the decoder generates the first probability distribution $v_{dist}$ by using the vocabulary classifier. The fused hidden vectors at the last layer of the encoder are input into the decoder, and the decoder calculates attention of the current vector in the decoder and the hidden vector of each token (for example, a token of ".5 kilometers" or a token of ".1 kilometers") in the encoder, to obtain the second probability distribution $d_{dist}$. The computing device determines the fused third probability distribution $f_{dists}$ based on the first probability distribution $v_{dist}$, the second probability distribution $d_{dist}$, and the following formula:

$$f_{dists} = p * d_{dist} + (1 - p) * v_{dist}$$

Optionally, while ensuring key information and suppressing repetition, the computing device decodes the final weighted distribution in a beam search manner, and sequentially predicts a complete answer. For the target answer obtained through decoding, the computing device performs character matching between the target answer and the support document, finds source information of each answer segment of the target answer, and verifies whether key entity information such as a number can be supported in the support document.

Step 706: Display a question answering card interface including the target answer.

Optionally, the target answer has a capability of fusing and summarizing the plurality of support documents, that is, the target answer comes from a plurality of different source web pages.

Optionally, the question answering card interface includes the target answer and answer source information, and the answer source information includes source information of support documents respectively corresponding to a plurality of answer segments of the target answer.

Optionally, on the question answering card interface, answer segments from different sources may be distinguished by colors and the like.

Optionally, answer segments, of the target answer, from different document sources are attached with hyperlinks that can be tapped. When receiving a signal hovering over the answer segment, the computing device displays a details page card. When receiving a tapping signal acting on the details page card, the computing device jumps to a source web page from which the answer segment comes, to further provide details and support for the answer.

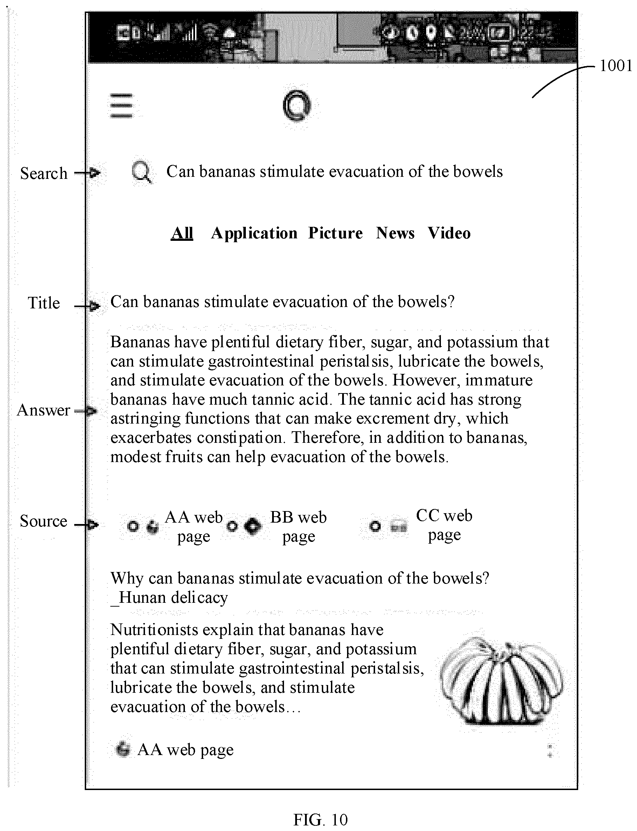

For example, as shown in FIG. 10, the computing device obtains a target question "Can bananas stimulates evacuation of the bowels" input by a user, and generates a question answering card interface 1001 by using the answer generation method provided in embodiments, the question answering card interface 1001 displays the searched target question, a corresponding title, a corresponding target answer, and answer source information.

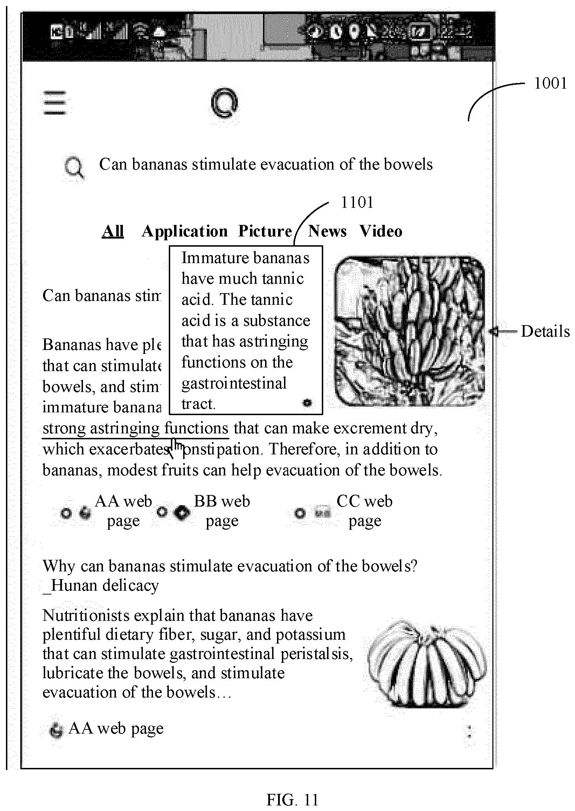

For another example, based on the question answering card interface 1001 provided in FIG. 10, as shown in FIG. 11, all answer segments, of the target answer, from different document sources are attached with hyperlinks that can be tapped. When receiving a signal hovering over the answer segment, the computing device displays a details page card 1101 corresponding to the answer segment.

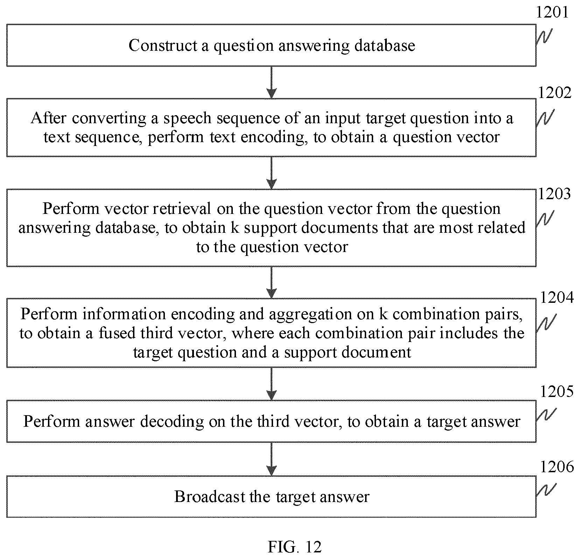

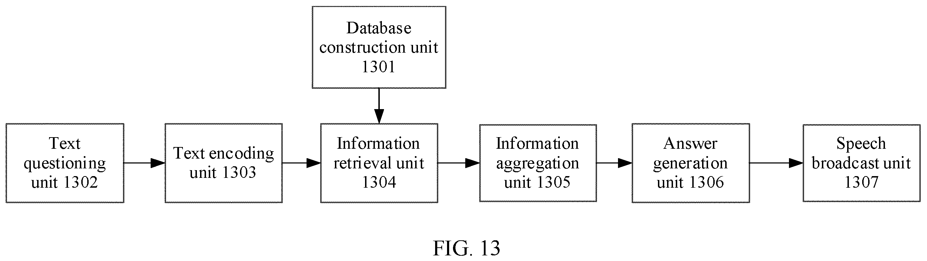

FIG. 12 is a flowchart of an answer generation method according to another example embodiment of this application. In this embodiment, an example in which the method is applied to the foregoing computing device is used for description. In a speech assistant, the answer generation method provided in embodiments of this application is used to output answer broadcast of a target answer to a question, of a user, of a speech type. When doubt information of the answer is received, a source of an answer segment of the target answer is output, to improve human-machine interaction effect. As shown in FIG. 13, units related to this embodiment include a database construction unit 1301, a text questioning unit 1302, a text encoding unit 1303, an information retrieval unit 1304, an information aggregation unit 1305, an answer generation unit 1306, and a speech broadcast unit 1307. The method includes the following several steps:

Step 1201: Construct a question answering database.

Step 1202: After converting a speech sequence of an input target question into a text sequence, perform text encoding, to obtain a question vector.

Optionally, a computing device converts the speech sequence of the input target question into the text sequence by using a first speech model, converts a type of the target question from a speech type into a text type, and performs text encoding, to obtain the question vector. For example, the first speech model is a streaming transformer model. This is not limited in embodiments of this application.

Step 1203: Perform vector retrieval on the question vector from the question answering database, to obtain k support documents that are most related to the question vector.

Step 1204: Perform information encoding and aggregation on k combination pairs, to obtain a fused third vector, where each combination pair includes the target question and a support document.

Step 1205: Perform answer decoding on the third vector, to obtain a target answer.

It should be noted that, for related details of step 1201 to step 1205, refer to related descriptions in the foregoing embodiments. Details are not described herein again.

Step 1206: Broadcast the target answer.

Optionally, the computing device converts a text sequence of the target answer into a speech sequence by using a second speech model, and broadcasts the target answer by using the speech assistant. For example, the second speech model is a streaming transformer model. This is not limited in embodiments of this application.

Optionally, after broadcasting the target answer, the computing device broadcasts answer source information. The answer source information includes source information of support documents respectively corresponding to a plurality of answer segments of the target answer.

The computer may actively or passively broadcast the source information of the answer. For example, when a user wants to know whether an answer segment of the target answer is reliable, doubt information of the answer segment is sent in a speech form. After receiving a speech sequence of the doubt information, the computer converts the speech sequence of the doubt information into a text sequence, and broadcasts source information of a corresponding support document.

In conclusion, on one hand, embodiments of this application provide an architecture for question answering multi-source information retrieval, aggregation, and generation. In the method, the k support documents are retrieved for the originally input target question. Then, the target question and the support documents are input into encoders with shared parameters, and attention calculation is performed, based on retrieval scores, on features obtained through encoding, to achieve effect of information aggregation. Finally, the decoder explicitly refers to information in the support documents through fusion encoding/decoding distribution, and generates an answer that has comprehensive content and strong traceability. On the other hand, the answer generation technology based on an encoding/decoding fusion distribution is provided. In the answer generation method, both the first probability distribution generated by the decoder and the second probability distribution extracted by the decoder are considered. The first probability distribution indicates a conditional probability of generating a next word based on a series of previous decoding words, and the second probability distribution indicates a probability that a next decoding word comes from words in the reference support document. The two probability distributions are combined in an adaptive manner, and a current decoding word is determined based on the combined third probability distribution. On the other hand, the UI for presentation for an answer generated from a plurality of sources. The UI for presentation can present information about an answer from a plurality of sources, and answer segments from different sources are distinguished by colors. If the user further wants to learn about details about the answer, the user can tap the answer segments from different sources. After the user taps the answer segment, a source web page from which the answer segment comes is jumped to.

Apparatus embodiments of this application are provided below, and may be configured to perform the method embodiments of this application. For details not disclosed in the apparatus embodiments of this application, refer to the method embodiments of this application.

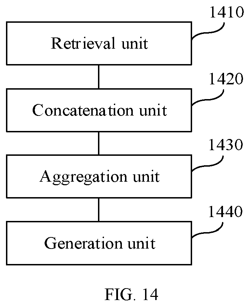

FIG. 14 is a block diagram of an answer generation apparatus according to an example embodiment of this application. The apparatus may be implemented as an entirety or a part of a computing device by using software, hardware, or a combination thereof. The apparatus may include a retrieval unit 1410, a concatenation unit 1420, an aggregation unit 1430, and a generation unit 1440.

The retrieval unit 1410 is configured to retrieve, based on an input target question, k support documents related to the target question, where k is a positive integer greater than 1.

The concatenation unit 1420 is configured to concatenate, for each of the k support documents, the target question and the support document, to obtain a combination pair.

The aggregation unit 1430 is configured to perform information aggregation on the k combination pairs, to obtain target aggregation information, where the information aggregation includes information encoding and exchanging.

The generation unit 1440 is configured to generate, based on the target aggregation information, a target answer corresponding to the target question.

In a possible implementation, the aggregation unit 1430 is further configured to:

encode the k combination pairs, to obtain first vectors respectively corresponding to the k combination pairs;

concatenate the k first vectors, to obtain a second vector; and

fuse information in the documents based on the second vector, to obtain a third vector, where the third vector indicates the target aggregation information.

In another possible implementation, the aggregation unit 1430 is further configured to:

perform attention calculation based on the second vector and retrieval scores respectively corresponding to the k support documents, to obtain the third vector, where the retrieval score indicates a correlation between the support document and the target question.

In another possible implementation, the retrieval score of the support document is in a positive correlation with impact of the support document on the third vector.

In another possible implementation, the generation unit 1440 is further configured to:

determine a first probability distribution and a second probability distribution based on the target aggregation information, where the first probability distribution indicates a probability that each word in a preset vocabulary is used as a currently output decoding word, and the second probability distribution indicates a probability that each word in the k support documents is used as a currently output decoding word;

fuse the first probability distribution and the second probability distribution, to obtain a third probability distribution; and

decode the third probability distribution, to obtain the target answer corresponding to the target question.

In another possible implementation, the apparatus further includes a present unit.

The present unit is configured to present the target answer and answer source information in a target form, where the target form includes a question answering card or speech broadcast, and the answer source information includes source information of support documents respectively corresponding to a plurality of answer segments of the target answer.

In another possible implementation, any two pieces of the answer source information have different colors and/or shapes.

In another possible implementation, the apparatus further includes a first display unit.

The first display unit is configured to: when receiving a first trigger signal corresponding to an answer segment of the target answer, display, on a current interface in a superimposed manner, description information corresponding to the answer segment.

In another possible implementation, the apparatus further includes a second display unit. The second display unit is configured to:

when receiving a second trigger signal corresponding to an answer segment of the target answer, jump to and display a source web page corresponding to the answer segment; or

when receiving a second trigger signal corresponding to an answer segment of the target answer, switch a display state of the answer segment from a first display state to a second display state, and jump to and display a source web page corresponding to the answer segment, where the first display state is different from the second display state.

It should be noted that, when the apparatus provided in the foregoing embodiment implements functions of the apparatus, division into the foregoing functional modules is only used as an example for description. During actual application, the foregoing functions may be allocated to different functional modules for implementation based on a requirement, that is, an inner structure of a device is divided into different functional modules, to implement all or some of the functions described above. In addition, the apparatus provided in the foregoing embodiment and the method embodiments belong to a same concept. For specific implementation processes thereof, refer to the method embodiments. Details are not described herein.

An embodiment of this application provides an answer generation apparatus. The apparatus includes a processor, and a storage configured to store instructions executed by the processor. The processor is configured to execute the instructions, to implement the method performed by the computing device in the foregoing embodiments.

An embodiment of this application provides a non-volatile computer-readable storage medium. The non-volatile computer-readable storage medium stores computer program instructions. When the computer program instructions are executed by a processor, the method performed by the computing device in the foregoing embodiments is implemented.

An embodiment of this application provides a computer program product. The computer program product includes computer-readable code or a non-volatile computer-readable storage medium carrying the computer-readable code. When the computer-readable code is run on a computing device, a processor of the computing device performs the method performed by the computing device in the foregoing embodiments.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk, a random access memory (Random Access Memory, RAM), a read-only memory (Read-Only Memory, ROM), an erasable programmable read-only memory (Electrically Programmable Read-Only Memory, EPROM, or flash memory), a static random access memory (Static Random Access Memory, SRAM), a portable compact disk read-only memory (Compact Disc Read-Only Memory, CD-ROM), a digital video disc (Digital Video Disc, DVD), a memory stick, a floppy disk, a mechanical coding device, for example, a punching card or a groove protrusion structure that stores instructions, and any suitable combination thereof.

The computer-readable program instructions or code described herein can be downloaded to respective computing/processing devices from the computer-readable storage medium, or downloaded to an external computer or external storage device via a network, for example, the Internet, a local area network, a wide area network and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network and forwards the computer-readable program instructions for storage in a computer-readable storage medium in each computing/-processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include an object-oriented programming language like Smalltalk and C++, and a conventional procedural programming language like a "C" language or a similar programming language. The computer-readable program instructions may be executed entirely on a user computer, partly on the user computer, as a stand-alone software package, partly on the user computer and partly on a remote computer, or entirely on the remote computer or a server. In a case involving a remote computer, the remote computer may be connected to a user computer over any kind of network, including a local area network (Local Area Network, LAN) or a wide area network (Wide Area Network, WAN), or may be connected to an external computer (for example, connected over the Internet using an Internet service provider). In some embodiments, an electronic circuit, for example, a programmable logic circuit, a field programmable gate array (Field Programmable Gate Array, FPGA), or a programmable logic array (Programmable Logic Array, PLA), is customized based on status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided for a processor of a general-purpose computer, a dedicated computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded onto a computer, another programmable data processing apparatus, or another device so that a series of operation steps are performed on the computer, the another programmable data processing apparatus, or the another device to produce a computer-implemented process. Therefore, the instructions executed on the computer, the another programmable data processing apparatus, or the another device implements the functions/acts specified in the one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved.

It should also be noted that each block in the block diagrams and/or the flowcharts and a combination of blocks in the block diagrams and/or the flowcharts may be implemented by hardware (for example, a circuit or an application-specific integrated circuit (Application-Specific Integrated Circuit, ASIC)) that performs a corresponding function or action, or may be implemented by a combination of hardware and software, for example, firmware.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce better effect.

The foregoing has described embodiments of this application. The foregoing descriptions are examples, not exhaustive, and are not limited to the disclosed embodiments. A plurality of modifications and changes are apparent to those of ordinary skill in the art without departing from the scope and spirit of the illustrated embodiments. The selection of terms used herein is intended to best explain the principles of embodiments, practical applications, or improvements to technologies in the market, or to enable another person of ordinary skill in the art to understand embodiments disclosed herein.

## Claims

1. An answer generation method, wherein the method comprises:

   retrieving, based on an input target question, k support documents related to the target question, wherein k is a positive integer greater than 1;
   concatenating, for each of the k support documents, the target question and the support document, to obtain a combination pair;
   performing information aggregation on the k combination pairs, to obtain target aggregation information, wherein the information aggregation comprises information encoding and exchanging; and
   generating, based on the target aggregation information, a target answer corresponding to the target question.

2. The method according to claim 1, wherein the performing information aggregation on the k combination pairs, to obtain target aggregation information comprises:

   encoding the k combination pairs, to obtain first vectors respectively corresponding to the k combination pairs;
   concatenating the k first vectors, to obtain a second vector; and
   fusing information in the documents based on the second vector, to obtain a third vector, wherein the third vector indicates the target aggregation information.

3. The method according to claim 2, wherein the fusing information in the documents based on the second vector, to obtain a third vector comprises:
   performing attention calculation based on the second vector and retrieval scores respectively corresponding to the k support documents, to obtain the third vector, wherein the retrieval score indicates a correlation between the support document and the target question.

4. The method according to claim 3, wherein the retrieval score of the support document is in a positive correlation with impact of the support document on the third vector.

5. The method according to any one of claims 1 to 4, wherein the generating, based on the target aggregation information, a target answer corresponding to the target question comprises:

determining a first probability distribution and a second probability distribution based on the target aggregation information, wherein the first probability distribution indicates a probability that each word in a preset vocabulary is used as a currently output decoding word, and the second probability distribution indicates a probability that each word in the k support documents is used as a currently output decoding word;

fusing the first probability distribution and the second probability distribution, to obtain a third probability distribution; and

decoding the third probability distribution, to obtain the target answer corresponding to the target question.

6. The method according to any one of claims 1 to 5, wherein the method further comprises:
presenting the target answer and answer source information in a target form, wherein the target form comprises a question answering card or speech broadcast, and the answer source information comprises source information of support documents respectively corresponding to a plurality of answer segments of the target answer.

7. The method according to claim 6, wherein any two pieces of the answer source information have different colors and/or shapes.

8. The method according to claim 6 or 7, wherein the method further comprises:
when receiving a first trigger signal corresponding to an answer segment of the target answer, displaying, on a current interface in a superimposed manner, description information corresponding to the answer segment.

9. The method according to any one of claims 6 to 8, wherein the method further comprises:

when receiving a second trigger signal corresponding to an answer segment of the target answer, jumping to and displaying a source web page corresponding to the answer segment; or

when receiving a second trigger signal corresponding to an answer segment of the target answer, switching a display state of the answer segment from a first display state to a second display state, and jumping to and displaying a source web page corresponding to the answer segment, wherein the first display state is different from the second display state.

10. An answer generation apparatus, wherein the apparatus comprises:

a retrieval unit, configured to retrieve, based on an input target question, k support documents related to the target question, wherein k is a positive integer greater than 1;

a concatenation unit, configured to concatenate, for each of the k support documents, the target question and the support document, to obtain a combination pair;

an aggregation unit, configured to perform information aggregation on the k combination pairs, to obtain target aggregation information, wherein the information aggregation comprises information encoding and exchanging; and

a generation unit, configured to generate, based on the target aggregation information, a target answer corresponding to the target question.

11. An answer generation apparatus, wherein the apparatus comprises:

a processor; and

a storage, configured to store instructions executable by the processor, wherein

when the processor is configured to execute the instructions, the method according to any one of claims 1 to 9 is implemented.

12. A non-volatile computer-readable storage medium, storing computer program instructions, wherein when the computer program instructions are executed by a processor, the method according to any one of claims 1 to 9 is implemented.

13. A computer program product, wherein the computer program product comprises computer-readable code or a non-volatile computer-readable storage medium carrying the computer-readable code, and when the computer-readable code is run on a computing device, a processor of the computing device performs the method according to any one of claims 1 to 9.

Offline module 110

Online question answering
retrieval unit 121

Multi-source information
aggregation unit 122

Answer generation unit 123

Present unit 124

Online module 120

FIG. 1

Computing device 130

Machine learning platform 140

Software

Answer generation unit 143

Vector retrieval engine 142

Vectorized inference
service unit 141

Host memory 150

Hardware

GPU memory 152

Question answering
database 151

FIG. 2

Mobile phone 200

Antenna 1  Antenna 2

251  252

| Mobile communication module 2G/3G/4G/5G | Wireless communication module BT/WLAN/GNSS/NFC/IR/FM |

270

270A Speaker

270B Receiver

270C Microphone

270D Headset jack

Audio module

294 Displays 1 to N

293 Cameras 1 to N

292 Indicator

291 Motor

290 Button

295 SIM card interfaces 1 to N

220 External storage interface

230 USB interface

Charging input

Processor  210

280 Sensor module

280A Gyroscope sensor

280B Acceleration sensor

280G Optical proximity sensor

280H Fingerprint sensor

280K Touch sensor

221 Internal storage

Retrieval unit 31

Concatenation unit 32

Aggregation unit 33

Generation unit 34

240 Charging management module

241 Power management module

242 Battery

FIG. 3

| Application program layer | Camera | Calendar | Maps | WLAN | Music | Messages |
|---|---|---|---|---|---|---|
| | Gallery | Calls | Navigation | Bluetooth | Videos | ... |

| Application program framework layer | Window manager | Content provider | Phone manager | Resource manager |
|---|---|---|---|---|
| | Notification manager | View system | ... | |

| System library | Surface manager | Three-dimensional graphics processing library | Android runtime (Android runtime) |
|---|---|---|---|
| | Two-dimensional graphics engine | Media library ... | |

| Kernel layer | Display driver | Camera driver | |
|---|---|---|---|
| | Audio driver | Sensor driver | ... |

FIG. 4

| 501 |
| Retrieve, based on an input target question, k support documents related to the target question, where k is a positive integer greater than 1 |

| 502 |
| Concatenate, for each of the k support documents, the target question and the support document, to obtain a combination pair |

| 503 |
| Perform information aggregation on k combination pairs, to obtain target aggregation information, where the information aggregation includes information encoding and exchanging |

| 504 |
| Generate, based on the target aggregation information, a target answer corresponding to the target question |

FIG. 5

FIG. 6

701

Construct a question answering database

702

Perform text encoding on an input target question, to obtain a question vector

703

Perform vector retrieval on the question vector from the question answering database, to obtain k support documents that are most related to the question vector

704

Perform information encoding and aggregation on k combination pairs, to obtain a fused third vector, where each combination pair includes the target question and a support document

705

Perform answer decoding on the third vector, to obtain a target answer

706

Display a question answering card interface including the target answer

FIG. 7

```
┌─────────────────┐
│    Database      │
│ construction unit│
│       81         │
└────────┬─────────┘
         │
         ▼
┌──────────┐    ┌──────────┐    ┌──────────────┐    ┌─────────────┐    ┌────────────┐    ┌────────────────┐
│   Text   │    │   Text   │    │ Information   │    │ Information │    │   Answer   │    │   Question      │
│questioning│──▶│ encoding │──▶│ retrieval unit│──▶│ aggregation │──▶│ generation │──▶│ answering card  │
│ unit 82  │    │ unit 83  │    │      84       │    │  unit 85    │    │   unit 86  │    │ present unit 87 │
└──────────┘    └──────────┘    └──────────────┘    └─────────────┘    └────────────┘    └────────────────┘
```

FIG. 8

FIG. 9A

CONT.
FROM
FIG. 9A

.1 kilometers

.5 kilometers

$$f_{dists} = p * d_{dist} + (1-p) * v_{dist}$$

.1
kilometers

Decoding word i

FIG. 9B

1001

Search

Q Can bananas stimulate evacuation of the bowels

**All** **Application** **Picture** **News** **Video**

Title

Can bananas stimulate evacuation of the bowels?

Bananas have plentiful dietary fiber, sugar, and potassium that can stimulate gastrointestinal peristalsis, lubricate the bowels, and stimulate evacuation of the bowels. However, immature bananas have much tannic acid. The tannic acid has strong astringing functions that can make excrement dry, which exacerbates constipation. Therefore, in addition to bananas, modest fruits can help evacuation of the bowels.

Answer

Source

AA web page
BB web page
CC web page

Why can bananas stimulate evacuation of the bowels?
_Hunan delicacy

Nutritionists explain that bananas have plentiful dietary fiber, sugar, and potassium that can stimulate gastrointestinal peristalsis, lubricate the bowels, and stimulate evacuation of the bowels...

AA web page

FIG. 10

1001

Q Can bananas stimulate evacuation of the bowels

1101

**All** Application Picture / News Video

Can bananas stim

Bananas have ple
that can stimulate
bowels, and stim
immature banana

| Immature bananas have much tannic acid. The tannic acid is a substance that has astringing functions on the gastrointestinal tract. |
|---|

Details

strong astringing functions that can make excrement dry,
which exacerbates constipation. Therefore, in addition to
bananas, modest fruits can help evacuation of the bowels.

AA web
page

BB web
page

CC web
page

Why can bananas stimulate evacuation of the bowels?
_Hunan delicacy

Nutritionists explain that bananas have
plentiful dietary fiber, sugar, and potassium
that can stimulate gastrointestinal peristalsis,
lubricate the bowels, and stimulate
evacuation of the bowels...

AA web page

FIG. 11

Construct a question answering database  1201

After converting a speech sequence of an input target question into a text sequence, perform text encoding, to obtain a question vector  1202

Perform vector retrieval on the question vector from the question answering database, to obtain k support documents that are most related to the question vector  1203

Perform information encoding and aggregation on k combination pairs, to obtain a fused third vector, where each combination pair includes the target question and a support document  1204

Perform answer decoding on the third vector, to obtain a target answer  1205

Broadcast the target answer  1206

FIG. 12

```
                                    ┌──────────────────┐
                                    │     Database     │
                                    │construction unit │
                                    │       1301       │
                                    └────────┬─────────┘
                                             │
                                             ▼
┌──────────┐   ┌──────────┐   ┌──────────────┐   ┌──────────────┐   ┌──────────────┐   ┌──────────────┐
│   Text   │   │          │   │              │   │              │   │              │   │              │
│questioning├──▶│Text encoding├─▶│Information   ├──▶│Information   ├──▶│   Answer     ├──▶│   Speech     │
│unit 1302 │   │ unit 1303 │   │retrieval unit│   │aggregation   │   │ generation   │   │broadcast unit│
│          │   │          │   │    1304      │   │ unit 1305    │   │  unit 1306   │   │    1307      │
└──────────┘   └──────────┘   └──────────────┘   └──────────────┘   └──────────────┘   └──────────────┘
```

FIG. 13

1410

Retrieval unit

1420

Concatenation unit

1430

Aggregation unit

1440

Generation unit

FIG. 14

## INTERNATIONAL SEARCH REPORT

| | |
|---|---|
| International application No. | |
| | **PCT/CN2023/104438** |

**A. CLASSIFICATION OF SUBJECT MATTER**

G06F16/332(2019.01)i

According to International Patent Classification (IPC) or to both national classification and IPC

**B. FIELDS SEARCHED**

Minimum documentation searched (classification system followed by classification symbols)

G06F16/-

Documentation searched other than minimum documentation to the extent that such documents are included in the fields searched

Electronic data base consulted during the international search (name of data base and, where practicable, search terms used)

CNABS, CNTXT, CNKI: 答案, 生成, 问答, 组合对, 拼接, 向量, 融合, 聚合, 编码, 注意力, 相关度, 概率分布, 检索, 查询; VEN, USTXT, IEEE: answer, generating, question, pair, fusion, clustering, encoder, attention, vector, probability, distribution, search, relationship

**C. DOCUMENTS CONSIDERED TO BE RELEVANT**

| Category* | Citation of document, with indication, where appropriate, of the relevant passages | Relevant to claim No. |
|---|---|---|
| X | CN 112527999 A (JIANGSU ACADEMY OF AGRICULTURAL SCIENCES) 19 March 2021 (2021-03-19) <br> description, paragraphs [0090]-[00134] | 1-2, 10-13 |
| A | CN 112749262 A (TENCENT TECHNOLOGY (SHENZHEN) CO., LTD.) 04 May 2021 (2021-05-04) <br> entire document | 1-13 |
| A | CN 113342950 A (BEIJING INFORMATION SCIENCE & TECHNOLOGY UNIVERSITY) 03 September 2021 (2021-09-03) <br> entire document | 1-13 |
| A | CN 114357127 A (WUHAN UNIVERSITY OF SCIENCE AND TECHNOLOGY) 15 April 2022 (2022-04-15) <br> entire document | 1-13 |
| A | CN 114358023 A (PING AN TECHNOLOGY (SHENZHEN) CO., LTD.) 15 April 2022 (2022-04-15) | |

☐ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **05 September 2023** | **21 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/104438**

| Patent document cited in search report | | | Publication date (day/month/year) | Patent family member(s) | | | Publication date (day/month/year) |
|---|---|---|---|---|---|---|---|
| CN | 112527999 | A | 19 March 2021 | None | | | |
| CN | 112749262 | A | 04 May 2021 | None | | | |
| CN | 113342950 | A | 03 September 2021 | CN | 113342950 | B | 21 April 2023 |
| CN | 114357127 | A | 15 April 2022 | None | | | |
| CN | 114358023 | A | 15 April 2022 | CN | 114358023 | B | 22 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211448800